# EUROPÄISCHE PATENTSCHRIFT

(11) **EP 1 731 386 B1**
(45) Veröffentlichungstag und Bekanntmachung des Hinweises auf die Patenterteilung: **02.09.2009**
(21) Anmeldenummer: 06114751.8
(22) Anmeldetag: 31.05.2006
(51) Int. Cl.: B60R 22/46

(54) **Gurtstraffvorrichtung**
Belt pretensioning device
Dispositif tendeur pour ceinture

(30) Priorität: 09.06.2005 DE 102005027285
(43) Veröffentlichungstag der Anmeldung: 13.12.2006
(73) Patentinhaber: TAKATA - PETRI AG, 63743 Aschaffenburg (DE)
(72) Erfinder: Glinka, Oliver, 89081 Ulm (DE)
(74) Vertreter: Baumgärtel, Gunnar

(56) Entgegenhaltungen:
- EP-A- 0 778 182
- DE-A1- 4 342 666
- DE-A1- 19 747 461
- US-A- 4 286 758
- US-A- 6 065 704

## Beschreibung

Die Erfindung betrifft eine Gurtstraffvorrichtung gemäß dem Oberbegriff des Anspruchs 1.

Aus der US-Patentschrift 6,065,704 ist eine Gurtstraffvorrichtung bekannt, bei der eine Wickelspindel mit einer Spindelnuss drehfest verbunden ist, so dass sich bei einer Drehung der Spindelnuss auch die Wickelspindel dreht. Die Spindelnuss weist einen Hohlraum mit einem Gewinde auf, in das das Gewinde eines Schubkolbens hineingedrückt wird, wenn ein Gasgenerator der Gurtstraffvorrichtung ausgelöst wird. Im Falle einer Auslösung des Gasgenerators wird der Schubkolben mit seinem Gewinde verschoben, wobei er sich relativ zu dem Gehäuse nicht drehen kann und daher seine Ausrichtung beibehalten muss. Durch das Nachvornschieben des Gewindes wird die Spindelnuss mit ihrem passenden Gegengewinde in eine Drehung versetzt, wodurch auch die Wickelspindel gedreht wird.

Eine kompakt aufgebaute Gurtstraffvorrichtungen mit den Merkmalen gemäß dem Oberbegriff des Anspruchs 1 ist aus der DE 195 45 898 A1 bekannt. Eine zur Befestigung an einer Kraftfahrzeugkarosserie bestimmte Beschlagseinrichtung weist eine starr mit der Beschlagseinrichtung gekoppelte Gewindeeinrichtung auf. Diese Gewindeeinrichtung umfasst einen sich entlang einer Wickelachse erstreckenden Kolbenschubabschnitt mit einem sich um die Wickelachse erstreckenden Gewinde. Weiterhin ist eine die Wickelachse umschließende und um die Wickelachse drehbar an der Beschlagseinrichtung angeordnete Wickelspindel zum teilweisen Aufwickeln eines Kraftfahrzeug-Sicherheitsgurts vorgesehen. Diese Wickelspindel ist zumindest abschnittsweise hohl ausgebildet und weist in diesem hohlen Bereich eine der Wickelachse zugewandte Innenwandung auf. An der Gewindeeinrichtung ist ein entlang der Wickelachse zumindest längs des Kolbenschubabschnitts beweglich angeordneter Schubkolben vorgesehen. Dieser Schubkolben wirkt mit dem Gewinde und der Innenwandung der Wickelspindel mechanisch derart zusammen, dass eine Kolbenbewegung des Schubkolbens entlang des Kolbenschubabschnittes eine Drehung der Wickelspindel erzwingt. Schließlich ist eine Antriebseinrichtung zum Antreiben der Kolbenbewegung im Crashfall eines Kraftfahrzeuges vorgesehen.

Der zylindrische Schubkolben weist entlang seines Umfangs zum mechanischen Zusammenwirken mit der Innenwandung der Wickelspindel über den Umfang des Schubkolbens hinausragende Schneiden auf. Diese Schneiden weisen einen Anstellwinkel derart auf, dass sie sich bei der Kolbenbewegung schraubenartig in die Innenwandung der Wickelspindel einschneiden und auf diese Weise mechanisch mit der Innenwandung zusammenwirken. Dazu ist es erforderlich, dass das Material der Wickelspindel weicher ausgebildet ist als das der Schneiden.

Dieser Aufbau ist vergleichsweise aufwändig und kostenintensiv in der Herstellung.

Der vorliegenden Erfindung liegt daher die Aufgabe zu Grunde, eine gattungsgemäße Gurtstraffvorrichtung bereitzustellen, die einfacher aufgebaut und somit kostensparender herstellbar ist.

Diese Aufgabe wird durch eine Gurtstraffvorrichtung mit den Merkmalen des Anspruchs 1 gelöst.

Erfindungsgemäß ist vorgesehen, dass die Innenwandung der Wickelspindel in Richtung der Wickelachse betrachtet entlang des sich längs der Wickelachse erstreckenden Kolbenschubabschnitts eine von einer Kreisform abweichende Spindelkontur aufweist.

Das Merkmal der Spindelkontur ist im Rahmen der vorliegenden Erfindung so zu verstehen, dass damit die Linie definiert ist, die bei einer Aufsicht des Querschnitts der Wickelspindel im Wesentlichen der Umfangslinie der Innenwandung der Wickelspindel entspricht. Mögliche Unterbrechungen der Umfangslinie, beispielsweise durch Löcher oder Nuten, ändern dabei nichts an der geometrischen Form der Spindelkontur. Die entsprechende Konturlinie ergibt sich für einen solchen Fall daraus, dass die jeweiligen Endpunkte der unterbrochenen Umfangslinie fiktiv miteinander verbunden werden. Gleiches gilt für nach innen, zur Wickelachse, gerichtete Einprägungen der Umfangslinie. Ein rundes Zahnrad mit einer Vielzahl periodisch angeordneter derartiger Einprägungen weist somit im Sinne der vorliegenden Erfindung ebenfalls eine kreisförmige Konturlinie auf.

Dadurch, dass die Geometrie der Spindelkontur nicht rotationsymmetrisch zur Wickelachse ausgebildet ist, führt eine Drehung des Schubkolbens um die Wickelachse zwangsläufig dazu, dass der im Innern der Wickelspindel angeordnete Schubkolben die Wickelspindel durch das mechanische Zusammenwirken mit deren Innenwandung in Rotation um die Wickelachse versetzt. Die Drehbewegung des Schubkolbens treibt dabei die Wickelspindel mittels einer kraftschlüssigen oder einer formschlüssigen Verbindung an.

Bevorzugt weist der Schubkolben dazu, in Richtung der Wickelachse betrachtet, eine im Vergleich zur Spindelkontur der Wickelspindel kleinere Kolben-Außenkontur auf. Die vorangehenden Ausführungen im Zusammenhang mit der Auslegung des Merkmals der Spindelkontur gelten entsprechend für die Kolben-Außenkontur.

In einer bevorzugten Ausführungsform ist die Kolben-Außenkontur des Schubkolbens der Spindelkontur der Wickelspindel im Wesentlichen entsprechend ausgebildet. Dabei ist hier das Merkmal "im Wesentlichen" derart zu verstehen, dass sowohl ein minimaler Unterschied zwischen Spindelkontur und Kolben-Außenkontur, der zu einer formschlüssige Verbindung zwischen Schubkolben und Wickelspindel führt, als auch größere Unterschiede der beiden Konturlinien darunter fallen, die die Ausbildung eines entlang der Kolben-Außenkontur verlaufenden Spalts zwischen Schubkolben und Wickelspindel zur Folge haben.

Ebenso ist denkbar, dass in einigen Bereichen entlang der Spindelkontur ein Formschluss zu benachbarten Bereichen der Kolben-Außenkontur besteht und andere Bereiche zwischen Schubkolben und Wickelspindel gleichzeitig durch einen Spalt voneinander getrennt sind.

Vorteilhaft ist es jedoch, wenn ein einziger entlang der Kolben-Außenkontur gleichförmig ausgebildeter Spalt Schubkolben und Wickelspindel voneinander trennt. Ein solcher gleichförmiger Spalt lässt sich besonders einfach mittels einer an der Kolben-Außenkontur angeordneten ebenfalls gleichförmig ausgebildeten Dichtungseinrichtung abdichten.

Zur mechanischen Wechselwirkung zwischen Schubkolben und Gewindeeinrichtung ist das Gewinde der Gewindeeinrichtung üblicherweise als Außengewinde ausgebildet. Der Schubkolben weist eine Aufnahmeöffnung mit einem zu diesem Außengewinde korrespondierenden Innengewinde auf. Zur Realisierung der gewünschten Bewegungsabläufe lässt sich das Gewinde beispielsweise als ein- oder als mehrgängiges Steilgewinde ausbilden.

Die Gewindeeinrichtung ist entlang des Kolbenschubabschnitts bevorzugt stangenförmig ausgebildet. Das führt zu einer im Wesentlichen linearen Kolbenbewegung des Schubkolbens.

Ein besonders einfacher Aufbau ergibt sich dadurch, dass die Gewindeeinrichtung als eine starr mit der Beschlagseinrichtung verbundene Stange ausgebildet ist, die das Gewinde entlang des Kolbenschubabschnitts aufweist. Gleichzeitig stellt diese Stange die Wickelachse der Wickelspindel dar.

Besonders einfach lässt sich die Wickelspindel als Hohlkörper aufbauen. Dieser weist entlang der Wickelachse betrachtet einen im Wesentlichen gleich bleibenden Querschnitt in Form der Spindelkontur auf. Die Herstellung einer solchen Wickelspindel ist denkbar einfach, weil das Vorsehen von Nuten oder Bohrlöchern nicht erforderlich ist.

Die Antriebseinrichtung ist bevorzugt als pyroelektrischer Gasgenerator ausgebildet und in baulicher Einheit mit dem Schubkolben, der Gewindeeinrichtung, der Wickelspindel oder der Beschlagseinrichtung angeordnet.

Eine gewünschte Länge, um die der Kraftfahrzeug-Sicherheitsgurt im Crashfall gestrafft wird, lässt sich durch eine entsprechende Ausbildung des Gewindes der Gewindeeinrichtung erzielen. Übliche Parameter sind dabei insbesondere die Gewindesteigung und die Zahl der Gewindegänge. Dadurch lässt sich die bei der Kolbenbewegung erzeugte Zahl und Drehung der Wickelspindel und somit die Strafflänge das Kraftfahrzeug-Sicherheitsgurts definiert einstellen.

Weiterhin ist an der Beschlagseinrichtung eine Sperreinrichtung vorgesehen, die die Drehung der Wickelspindel in Gurtstraffrichtung zulässt und eine dazu entgegengesetzte Drehung der Wickelspindel in Sperrrichtung sperrt.

Bevorzugt ist die Gurtstraffvorrichtung mit einem Torsionselement ausgerüstet. Dabei verursacht die Drehung der Wickelspindel in Gurtstraffrichtung eine Bewegung des Torsionselements derart, dass das Torsionselement als Kraftbegrenzer für ein auf die Wickelspindel wirkendes Drehmoment in der entgegengesetzten Sperrrichtung wirkt.

Sowohl bei der Variante mit als auch bei der Variante ohne Torsionselement umfasst die Sperreinrichtung bevorzugt ein starr mit der Wickelspindel gekoppeltes koaxial zur Wickelachse angeordnetes erstes Zahnrad und eine mit dem ersten Zahnrad zusammenwirkende Sperrklinke. Die Sperrklinke ist dabei an der Beschlagseinrichtung derart verschwenkbar befestigt, dass diese bei einer Drehung der Wickelspindel in Gurtstraffrichtung durchratscht. Eine vorteilhafte Variante besteht darin, die Wickelspindel einstückig mit dem ersten Zahnrad auszubilden.

Bei der Variante mit Torsionselement umfasst die Sperreinrichtung bevorzugt ein an der Beschlagseinrichtung drehbar befestigtes zweites Zahnrad, das das erste Zahnrad kämmt. Das zweite Zahnrad ist starr mit einem Ende des Torsionselements gekoppelt und ein davon beabstandetes anderes Ende des Torsionselements starr mit einem drehbar an der Beschlagseinrichtung angeordneten dritten Zahnrad gekoppelt. Die Sperrklinke wirkt dabei in der vorangehen beschriebenen Weise mit dem dritten Zahnrad zusammen.

Bevorzugt sind das zweite Zahnrad und das dritte Zahnrad derart an der Beschlagseinrichtung angeordnet, dass sich das Torsionselement in Form eines Torsionsstabs parallel zur Wickelachse ausbilden lässt. Dadurch ergibt sich ein sehr kompakter Aufbau der gesamten Gurtstraffvorrichtung.

Weitere Merkmale und Vorteile der Erfindung werden im Zusammenhang mit der nachfolgenden Beschreibung einiger bevorzugt Ausführungsbeispiele erläutert.

Es zeigt:
- Figur 1: die perspektivische Ansicht einer ersten Ausführungsform der Gurtstraffvorrichtung;
- Figur 2: die perspektivische Ansicht einer zweiten Ausführungsform der Gurtstraffvorrichtung;
- Figur 3a: eine Aufsicht auf die Wickelspindel in der mit III bezeichneten Ebene wie in den Figuren 1 und 2 gezeigt und
- Figur 3b: die Vergrößerung eines Ausschnitts aus Figur 3a.

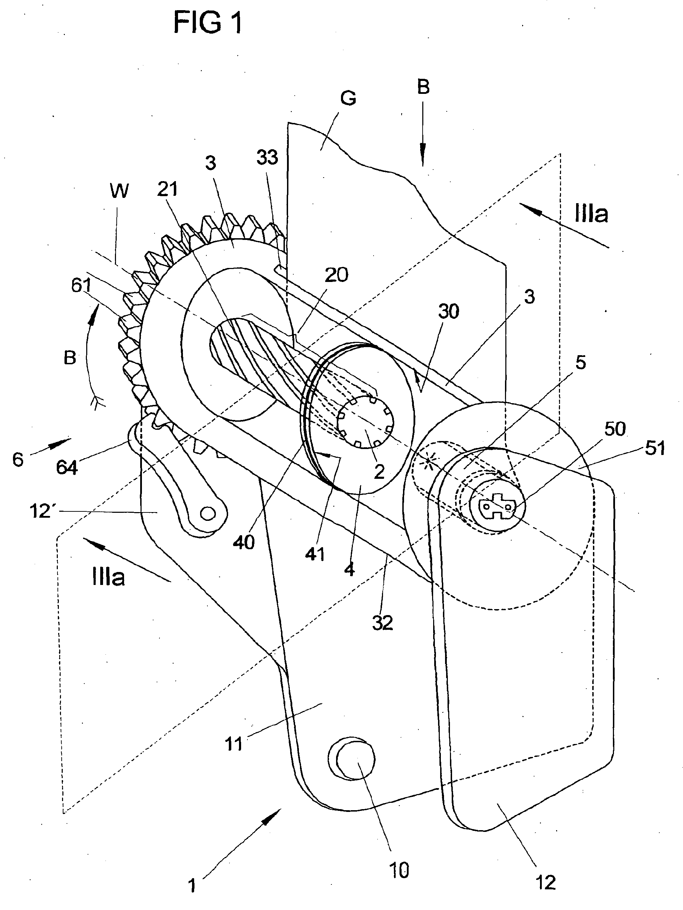

Figur 1 zeigt die perspektivische Ansicht einer ersten Ausführungsform der erfindungsgemäßen Gurtstraffvorrichtung.

Die Gurtstraffvorrichtung umfasst eine Beschlagseinrichtung 1 mit einer Grundplatte 11. An der Grundplatte 11 ist eine Bohrung 10 zur Befestigung der Beschlagseinrichtung 1 und somit der Gurtstraffvorrichtung an einer Kraftfahrzeug-Karosserie vorgesehen. Aus der Erstreckungsebene der Grundplatte 11 weisen zwei einander gegenüberliegende Wangen 12, 12' im Wesentlichen senkrecht zu dieser Erstreckungsebene orientiert heraus. Zwischen diesen beiden Wangen 12, 12' ist eine Gewindeeinrichtung 2 als stangenförmiges Element drehfest an linken Wange 12' der Beschlagseinrichtung 1 angeordnet. Dabei verläuft die Gewindeeinrichtung 2 im Wesentlichen parallel beabstandet zur Erstreckungsebene der Grundplatte 11 der Beschlagseinrichtung. Die Beschlagseinrichtung 1 ist üblicherweise als einstückiges Stahlteil ausgebildet. Unabhängig von den übrigen technischen Merkmalen der Gurtstraffvorrichtung sind jedoch ebenso andere Materialien, die entsprechende Lasten aufnehmen können, oder auch ein mehrteiliger Aufbau denkbar.

Die Gewindeeinrichtung 2 umfasst entlang ihrer Erstreckungsrichtung einen Kolbenschubabschnitt 20, der mit einem längs des stangenförmigen Kolbenschubabschnitts 20 verlaufenden Außengewinde 21 versehen ist. Das Außengewinde 21 erstreckt sich dabei von der linken Wange 12' über die Hälfte der Ausdehnung des Abstands zwischen der rechten Wange 12 und der linken Wange 12'. An dem von der linken Wange 12' beabstandet angeordneten Ende des Außengewinde 21 ist ein Schubkolben 4 auf der Gewindeeinrichtung 2 angeordnet. Der Schubkolben 4 ist als ovaler Stempel ausgebildet, in dessen Mitte ein mit dem Außengewinde 21 zusammenwirkendes Innengewinde 42 vorgesehen ist.

Im Bereich der rechten Wange 21 der Beschlagseinrichtung 1 ist ein pyroelektrischer Gasgenerator 5 im Innern der Wickelspindel 3 angeordnet. Dieser Gasgenerator 5 lässt sich durch eine Steckereinrichtung 50, die durch die rechte Wange 12 hindurchgeführt ist, elektrisch kontaktieren. Der durch den Gasgenerator 5 benötigte Bauraum entlang der Wickelachse W begrenzt letztlich auch den für die Gewindeeinrichtung 2 zur Verfügung stehenden Bauraum.

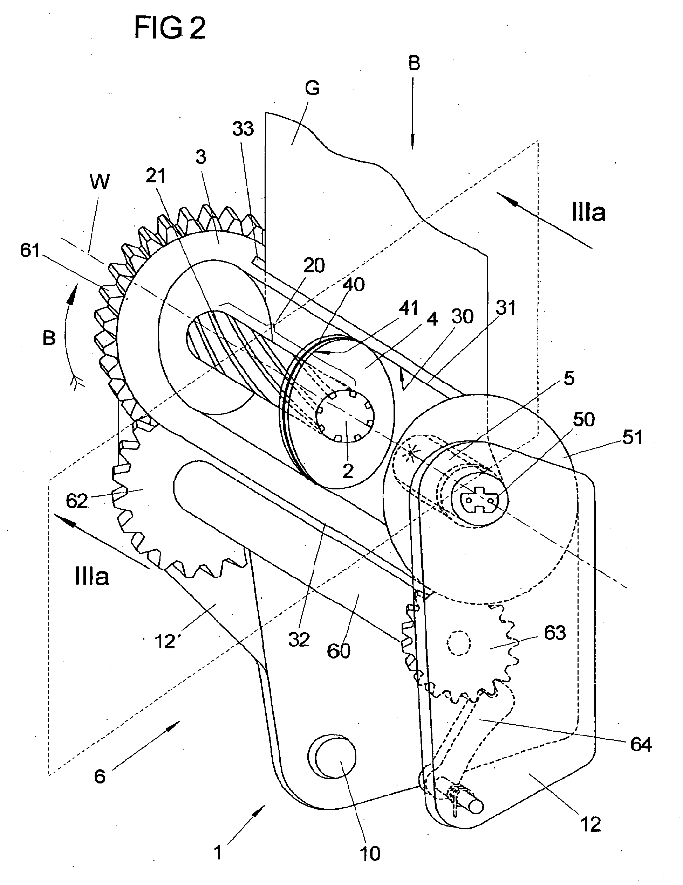

Die Gewindeeinrichtung 2, der Schubkolben 4 und der Gasgenerator 5 sind von einer in den Figuren 1 und 2 jeweils durchsichtig dargestellten Wickelspindel 3 umschlossen. Diese Wickelspindel 3 ist im Wesentlichen als Rohr mit einem runden Außendurchmesser mit einer Außenkontur 32 und einem ovalen Innendurchmesser mit einer Spindelkontur 31 ausgebildet. Diese rohrförmige Wickelspindel 3 ist derart zwischen den Wangen 12, 12' angeordnet, dass die Erstreckungsachse der Getriebeeinrichtung 2 eine Wickelachse W darstellt, um die die Wickelspindel 3 drehbar zwischen den Wangen 12, 12' gelagert ist. Dabei ist die Fläche des ovalen Innendurchmessers der Wickelspindel 3 nur geringfügig größer ausgebildet als die Fläche des ovalen Schubkolbens 4, der im Innern der Wickelspindel 3 angeordnet ist. Im schmalen Zwischenraum zwischen der Innenwandung 30 der Wickelspindel 3 und dem Schubkolben 4 ist eine den Zwischenraum abdichtende Dichtungsvorrichtung 40 vorgesehen. Die Dichtungsvorrichtung 40 ist jedoch derart ausgelegt, dass bei einer Bewegung des Schubkolbens 4 entlang der Innenwandung 30 keine erheblichen Reibungswiderstände auftreten.

Außerdem ist zwischen der rechten Wange 12 und der Wickelspindel 3 eine Abdeckung 51 vorgesehen, die derart ausgebildet ist, dass Sie die der rechten Wange 12 zugewandte Öffnung der Wickelspindel 3 hinreichend gegenüber einem entstehenden Gasdruck dichtet, wenn der Gasgenerator gezündet wird.

In der Wickelspindel 3 ist ferner ein Gurtaufnahmeschlitz 33 vorgesehen, durch den sich ein Kraftfahrzeug-Sicherheitsgurt G hindurchführen lässt, um an der Wickelspindel 3 befestigt zu werden.

Im Bereich der linken Wange 12' ist ein konzentrisch zur Wickelachse W und drehfest mit der Wickelspindel 3 verbundenes erstes Zahnrad 61 vorgesehen. Dieses erste Zahnrad 61 kämmt mit einer an der Befestigungseinrichtung 1 angeordneten Sperrklinke 64. Bei dieser Ausführungsform bilden das erste Zahnrad 61 und die zugeordnete Sperrklinke 64 eine Sperreinrichtung 6, auf deren Funktion nachfolgend näher eingegangen wird.

Im Folgenden wird die Funktionsweise der in Figur 1 dargestellten ersten Ausführungsform der Gurtstraffvorrichtung erläutert.

Wenn der Gasgenerator 5 über die Steckereinrichtung 50 das Signal zum Auslösen seiner pyrotechnischen Ladung erhält, so entstehen im Innern der Wickelspindel 3 zwischen der der rechten Wange 12 benachbarten Abdeckung 51 und dem Schubkolben 4 explosionsartig Gase. Die Expansion dieser Gase zwingt den Schubkolben 4 in Richtung der linken Wange 12' über das Außengewinde 21 der Gewindeeinrichtung 2 hinweg. Durch das mechanische Zusammenwirken zwischen dem Innengewinde 42 des Schubkolbens 4 und dem Außengewinde 21 der Gewindeeinrichtung 2 wird der Schubkolben 4 bei seiner im Wesentlichen linearen Bewegung in Richtung der linken Wange 12' zur Rotation um die Wickelachse W gezwungen.

Dadurch, dass die Innenwandung 30, im Querschnitt, d.h. entlang der Wickelachse W betrachtet, eine von einer Kreisform abweichende Spindelkontur aufweist, nimmt der Schubkolben 4 bei seiner Drehbewegung die Wickelspindel 3 mit und versetzt diese in Drehung um die Wickelachse W. Diese Drehung erfolgt im Umlaufsinn einer Gurtstraffrichtung B, die mit dem am ersten Zahnrad 61 angeordneten Drehpfeil verdeutlicht ist. Auf diese Weise wird der Sicherheitsgurt um eine durch die Parameter des Außengewindes 21 (Gewindesteigung und Zahl der Gewindegänge) definierte Länge gestrafft.

So lange sich das erste Zahnrad 61 in Gurtstraffrichtung B bewegt, ratscht die Sperrklinke 64 durch. Eine umgekehrte Drehung der Wickelspindel 3 wird durch die Sperrklinke mechanisch verhindert.

Die in Figur 2 dargestellte zweite Ausführungsvariante entspricht im Aufbau der Beschlagseinrichtung 1, der Gewindeeinrichtung 2, der Wickelspindel 3, des Schubkolbens 4 und des Gasgenerators 5 samt der jeweils zugehörigen Bauelemente der vorangehend beschriebenen ersten Ausführungsform. Die vorangehenden Ausführungen zu Aufbau und Funktion gelten somit entsprechend.

Im Unterschied zur ersten Ausführungsvariante, weist die Sperreinrichtung 6 noch ein Torsionselement 60 auf, das die Sperrkraft des Sicherheitsgurts entgegen der Gurtstraffrichtung begrenzt. Dazu ist unterhalb des ersten Zahnrads 61 ein zweites Zahnrad 62 an der linken Wange 12' der Befestigungseinrichtung 1 angeordnet. Das erste Zahnrad 61 kämmt dabei das zweite Zahnrad 62. Drehfest mit dem zweiten Zahnrad 62 ist das erste Ende eines stabförmigen Torsionselements 60 verbunden, das im Wesentlichen parallel zur Wickelspindel 3 angeordnet ist. Am zweiten Ende des Torsionselements 60 ist an der rechten Wange 12 ein drittes Zahnrad 63 drehfest mit dem Torsionselement 60 verbunden. Das dritte Zahnrad 63 kämmt eine an der Beschlagseinrichtung 1 vorgesehene Sperrklinke 64.

Die Sperrklinke 64 ist dabei derart angeordnet, dass sie das dritte Zahnrad 63 durchratscht, wenn sich die Wickelspindel 3 in Gurtstraffrichtung B dreht. Dazu entgegengesetzt sperrt die Sperrklinke 64 die Drehung der Wickelspindel. Bei einer entsprechenden Kraftausübung entgegen der Gurtstraffrichtung auf den Sicherheitsgurt G tordiert das stabförmige Torsionselement 60. Durch die entsprechende Auswahl des Materials für das Torsionselement 60 lässt sich beim Vorgang des Gurtstraffens auf einfache und effiziente Weise eine Kraftbegrenzung der auf den Gurt ausgeübten Straffkraft erzielen.

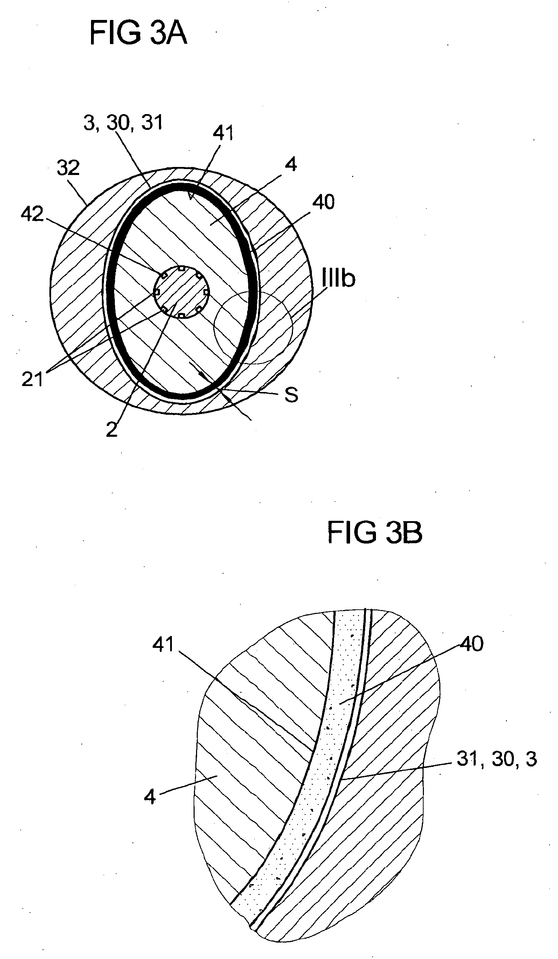

Figur 3a zeigt eine Aufsicht auf die Wickelspindel 3, geschnitten in der mit III bezeichneten Ebene wie in den Figuren 1 und 2 gezeigt.

Man erkennt den Schubkolben 4 mit seiner ovalen Kolben-Außenkontur 41. Im Mittelpunkt des Ovals vom Schubkolben 4 ist die Gewindeeinrichtung 2 mit dem Außengewinde 21 angeordnet. Das Innengewinde 42 des Schubkolbens 4 greift entsprechend in das Außengewinde 21 der Gewindeeinrichtung. Durch einen Spalt S von der Kolben-Außenkontur 41 beabstandet ist der Schubkolben 4 von der Wickelspindel 3 mit seiner Innenwandung 30 entlang seiner Spindelkontur 31 umschlossen. Die Spindelkontur 31 ist ebenfalls oval und nur etwas größer als das Oval der Kolben-Außenkontur 41 ausgebildet. Die Außenkontur 32 der Wickelspindel 3 ist kreisförmig ausgebildet. Der Spalt S ist zum größten Teil durch die Dichtungseinrichtung 40 ausgefüllt.

Figur 3b zeigt einen vergrößerten Ausschnitt des Bereichs zwischen Schubkolben 4 und Wickelspindel 3 wie in Figur 3a angedeutet.

Die in den Ausführungsbeispielen dargestellten ovalen Formen der Spindelkontur 31 von Wickelspindel 3 und der Kolben-Außenkontur 41 sind keineswegs zwingend. Im Hinblick auf die zu wählende Geometrie ist lediglich entscheidend, dass die Spindelkontur 31 von einer Kreisform abweicht, wobei die Geometrie des Schubkolbens 4 derart ausgebildet ist, dass eine Drehung des Schubkolbens 4 um die Wickelachse W im mechanischen Zusammenwirken der zwischen Schubkolben 4 und Innenwandung 30 der Wickelspindel 3 zwangsläufig zu einer Drehung der Wickelspindel 3 führt.

Beispielsweise sind die Spindelkontur 31 der Wirkspindel 3 und die der Kolbenaußenkontur 41 elliptisch; das Verhältnis zwischen der Länge der Hauptachse dieser Ellipse und der Länge der Nebenachse der Ellipse beträgt vorzugsweise mindestens 1,1, besonders bevorzugt mindestens 1,5.

Auf das vorangehend genannte Wirkprinzip ist die Geometrie der Außenkontur 32 der Wickelspindel ohne Einfluss. Daher sind beliebige Geometrien für die Außenkonturen vorstellbar.

Unabhängig von den vorangehend beschriebenen Ausführungsformen eignen sich alle erfindungsgemäßen Gurtstraffvorrichtungen insbesondere dazu, den Beckengurt eines Dreipunktgurtes in einem Kraftfahrzeug zu straffen.

### Bezugszeichenliste

- 1: Beschlagseinrichtung
- 10: Bohrung
- 11: Grundplatte
- 12, 12': linke und rechte Wange
- 2: Gewindeeinrichtung
- 20: Kolbenschubabschnitt
- 21: Gewinde
- 3: Wickelspindel
- 30: Innenwandung
- 31: Spindelkontur
- 32: Außenkontur
- 33: Gurtaufnahmeschlitz
- 4: Schubkolben
- 40: Dichtungseinrichtung
- 41: Kolben-Außenkontur
- 42: Innengewinde
- 5: Gasgenerator
- 50: Steckereinrichtung
- 51: Abdeckung
- 6: Sperreinrichtung
- 60: Torsionselement
- 61: Erstes Zahnrad
- 62: Zweites Zahnrad
- 63: Drittes Zahnrad
- 64: Sperrklinke

- B: Gurtstraffrichtung
- G: Kraftfahrzeug -Sicherheitsgurt
- S: Spalt
- W: Wickelachse

## Patentansprüche

1. Gurtstraffvorrichtung zur Straffung eines Kraftfahrzeug-Sicherheitsgurts im Crashfall mit:
• einer zur Befestigung an einer Kraftfahrzeug-Karosserie bestimmten Beschlagseinrichtung (1),
• einer starr mit der Beschlagseinrichtung (1) gekoppelten Gewindeeinrichtung (2), die einen sich entlang einer Wickelachse (W) erstreckenden Kolbenschubabschnitt (20) mit einem sich um die Wickelachse (W) erstreckenden Gewinde (21) aufweist,
• einer die Wickelachse (W) umschließende und um die Wickelachse (W) drehbar an der Beschlagseinrichtung (1) angeordnete, zumindest abschnittsweise hohl ausgebildeten Wickelspindel (3) zum teilweisen Aufwickeln eines Kraftfahrzeug-Sicherheitsgurts (G), wobei die Wickelspindel (3) eine der Wickelachse (W) zugewandte Innenwandung (30) aufweist,
• einem zumindest längs des Kolbenschubabschnitts (20) der Gewindeeinrichtung (2) entlang der Wickelachse (W) beweglich angeordneten Schubkolben (4), der derart mit dem Gewinde (21) und der Innenwandung (30) der Wickelspindel (3) mechanisch zusammenwirkt, dass eine im wesentlichen lineare Kolbenbewegung des Schubkolbens (4) entlang des Kolbenschubabschnittes (20) eine Drehung der Wickelspindel (3) in einer Gurtstraffrichtung (S) erzwingt und
• einer Antriebseinrichtung zum Antrieb der Kolbenbewegung,
**dadurch gekennzeichnet,**
**dass** die Innenwandung (30) der Wickelspindel (3) in Richtung der Wickelachse (W) betrachtet zumindest entlang des sich längs der Wickelachse (W) erstreckenden Kolbenschubabschnitts (20) eine von einer Kreisform abweichende Spindelkontur (31) aufweist.

2. Gurtstraffvorrichtung gemäß Anspruch 1, **dadurch gekennzeichnet, dass** der Schubkolben (4) in Richtung der Wickelachse (W) betrachtet eine im Vergleich zur Spindelkontur (31) der Wickelspindel (3) kleinere Kolben-Außenkontur (41) aufweist.

3. Gurtstraffvorrichtung gemäß Anspruch 2, **dadurch gekennzeichnet, dass** die Kolben-Außenkontur (41) des Schubkolbens (4) der Spindelkontur (31) der Wickelspindel (3) im Wesentlichen entspricht.

4. Gurtstraffvorrichtung gemäß Anspruch 2 oder 3, **dadurch gekennzeichnet, dass** die Kolben-Außenkontur (41) des Schubkolbens (4) derart kleiner als die Spindelkontur (31) ausgebildet ist, dass sich zwischen der Kolben-Außenkontur (41) des Schubkolbens (4) und der Innenwandung (30) der Wickelspindel (3) mindestens ein Spalt (S) ausbildet.

5. Gurtstraffvorrichtung gemäß Anspruch 4, **dadurch gekennzeichnet, dass** der Spalt (S) mittels einer an der Kolben-Außenkontur (41) angeordneten Dichtungseinrichtung (40) abgedichtet ist.

6. Gurtstraffvorrichtung gemäß Anspruch 5, **dadurch gekennzeichnet, dass** der Spalt und die Dichtungseinrichtung (40) entlang der Kolben-Außenkontur (41) gleichmäßig ausgebildet sind.

7. Gurtstraffvorrichtung gemäß einem der vorangehenden Ansprüche, **dadurch gekennzeichnet, dass** sich das Gewinde (21) der Gewindeeinrichtung (2) stangenförmig entlang der Wickelachse (W) erstreckt und sich der Schubkolben (4) im Wesentlichen linear entlang des Kolbenschubabschnitts (20) bewegen lässt.

8. Gurtstraffvorrichtung gemäß Anspruch 7, **dadurch gekennzeichnet, dass** die gesamte Gewindeeinrichtung stangenförmig ausgebildet ist.

9. Gurtstraffvorrichtung gemäß einem der vorangehenden Ansprüche, **dadurch gekennzeichnet, dass** sich die Wickelspindel (3) als Hohlkörper mit im wesentlichem gleich bleibenden Querschnitt in Form der Spindelkontur (31) entlang der Wickelachse (W) erstreckt.

10. Gurtstraffeinrichtung gemäß einem der vorangehenden Ansprüche, **dadurch gekennzeichnet, dass** die Antriebseinrichtung als pyroelektrischer Gasgenerator (5) ausgebildet ist.

11. Gurtstraffeinrichtung gemäß Anspruch 10, **dadurch gekennzeichnet, dass** der Gasgenerator (5) am Schubkolben (4), an der Gewindeeinrichtung (2), an der Wickelspindel (3) oder an der Beschlagseinrichtung (1) angeordnet ist.

12. Gurtstraffeinrichtung gemäß einem der vorangehenden Ansprüche, **dadurch gekennzeichnet, dass** das Gewinde (21) eine Anzahl von Gewindegängen mit definierter Gewindesteigung derart aufweist, dass die durch die Kolbenbewegung erzwungene Drehbewegung der Wickelspindel (3) einen an der Wickelspindel (3) befestigten Kraftfahrzeug-Sicherheitsgurt (G) um eine gewünschte Länge strafft.

13. Gurtstraffvorrichtung gemäß einem der vorangehenden Ansprüche, **dadurch gekennzeichnet, dass** an der Beschlagseinrichtung (1) eine Sperreinrichtung (6) vorgesehen ist, die die Drehung der Wickelspindel (3) in Gurtstraffrichtung (B) zulässt und eine dazu entgegen gesetzte Drehung der Wickelspindel (3) in Sperrrichtung sperrt.

14. Gurtstraffvorrichtung gemäß Anspruch 13, **dadurch gekennzeichnet, dass** die Drehung der Wickelspindel (3) in Gurtstraffrichtung ein Torsionselement (60) antreibt, das als Kraftbegrenzer für ein auf die Wickelspindel (3) wirkendes Drehmoment in Sperrrichtung wirkt.

15. Gurtstraffvorrichtung gemäß Anspruch 13 oder 14, **dadurch gekennzeichnet, dass** die Sperreinrichtung (6) ein starr mit der Wickelspindel (3) gekoppeltes koaxial zur Wickelachse(W) angeordnetes erstes Zahnrad (61) und eine mit dem ersten Zahnrad (61) zusammenwirkende Sperrklinke (64) aufweist.

16. Gurtstraffvorrichtung gemäß Anspruch 15, **dadurch gekennzeichnet, dass** die Sperreinrichtung (6) ein an der Beschlagseinrichtung (1) drehbar befestigtes zweites Zahnrad (62) aufweist, das das erste Zahnrad (61) kämmt, wobei das zweite Zahnrad (62) starr mit einem Ende des Torsionselements (60) gekoppelt ist und ein davon beabstandetes anderes Ende des Torsionselements (60) starr mit einem drehbar an der Beschlagseinrichtung angeordneten dritten Zahnrad (63) gekoppelt ist, das mit der Sperrklinke (64) zusammenwirkt.

17. Gurtstraffvorrichtung gemäß Anspruch 16, **dadurch gekennzeichnet, dass** das zweite Zahnrad (62) und das dritte Zahnrad (63) derart angeordnet sind, dass das Torsionselement (60) stabförmig parallel zur Wickelachse (W) ausgebildet ist.

## Claims

1. Belt tensioning device for tensioning a motor vehicle seat belt in case of a crash, comprising:
• a fitting device (1) provided for being fastened to a motor vehicle body,
• a thread device (2) rigidly coupled to the fitting device (1), which thread device (2) comprises a piston push section (20) extending along a winding axis (W) having a thread (21) extending around the winding axis (W),
• a winding spindle (3) for partially winding a motor vehicle seat belt, which winding spindle (3) encloses the winding axis (W) and is arranged at the fitting device such that it can be rotated about the winding axis (W) and is formed hollow at least in sections, wherein the winding spindle (3) comprises an inner wall facing the winding axis (W),
• a pushing piston (4) at least along the piston push section (20) of the tread device (2) movably arranged along the winding axis (W), which pushing piston (3) mechanically interacts with the thread (21) and the inner wall (30) of the winding spindle (3) such that an essentially linear piston movement of the pushing piston (4) along the piston push section (20) enforces a rotation of the winding spindle (3) in a belt tensioning direction (S) and
• a drive device for driving the piston movement,
**characterized in that,**
the inner wall (30) of the winding spindle (3) as viewed in the direction of the winding axis (W) comprises at least along the piston push section (20) extending along the winding axis (W) a spindle contour (31) that deviates from a circular shape.

2. Belt tensioning device according to claim 1, **characterized in that** the pushing piston (4) as viewed in the direction of the winding axis (W) comprises compared to the spindle contour (31) of the winding spindle (3) a smaller piston outer contour (41).

3. Belt tensioning device according to claim 2, **characterized in that** the piston outer contour (41) of the pushing piston (4) essentially corresponds to the spindle contour (31) of the winding spindle (3).

4. Belt tensioning device according to claim 2 or 3, **characterized in that** the piston outer contour (41) of the pushing piston (4) is formed smaller than the spindle contour (31) such that at least one gap (S) is formed between the piston outer contour (41) of the pushing piston (4) and the inner wall (30) of the winding spindle (3).

5. Belt tensioning device according to claim 4, **characterized in that** the gap (S) is sealed by means of a seal device (40) arranged at the piston outer contour (41).

6. Belt tensioning device according to claim 5, **characterized in that** the gap and the seal device (40) are uniformly formed along the piston outer contour (41).

7. Belt tensioning device according to one of the preceding claims, **characterized in that** the thread (21) of the thread device (2) extends rod-shaped along the winding axis (W) and the pushing piston (4) can be moved essentially linearly along the piston push section (20).

8. Belt tensioning device according to claim 7, **characterized in that** the whole thread device is formed rod-shaped.

9. Belt tensioning device according to one of the preceding claims, **characterized in that** the winding spindle (3) extends as a hollow body having an essentially constant cross section in the form of the spindle contour (31) along the winding axis (W).

10. Belt tensioning device according to one of the preceding claims, **characterized in that** the drive device is formed as a pyroelectric gas generator (5).

11. Belt tensioning device according to claim 10, **characterized in that** the gas generator (5) is arranged at the pushing piston (4), at the thread device (2), at the winding device (3) or at the fitting device (1).

12. Belt tensioning device according to one of the preceding claims, **characterized in that** the thread (21) comprises a number of thread turns having a defined thread pitch so that the rotation of the winding spindle (3) enforced by the piston movement tensions a motor vehicle seat belt attached to the winding spindle (3) by a desired length.

13. Belt tensioning device according to one of the preceding claims, **characterized in that** a locking device (6) is provided at the fitting device (1) that allows for the rotation of the winding spindle (3) in the belt tensioning direction (B) and locks a rotation of the winding spindle (3) opposite thereto in the locking direction.

14. Belt tensioning device according to claim 13, **characterized in that** the rotation of the winding spindle (3) in the belt tensioning direction drives a torsion element (60) that acts as a force delimiter for a torque acting on the winding spindle (3) in the locking direction.

15. Belt tensioning device according to claim 13 or 14, **characterized in that** the locking device (6) comprises a first toothed wheel (61) rigidly coupled to the winding spindle (3) and coaxially arranged with respect to the winding axis (W) and a pawl (64) that interacts with the first toothed wheel (61).

16. Belt tensioning device according to claim 15, **characterized in that** the locking device (6) comprises a second toothed wheel (62) rotatably mounted on the fitting device (1) that meshes with the first toothed wheel (61), wherein the second toothed wheel (62) is rigidly coupled to one end of the torsion element (60) and another end of the torsion element (60) being spaced apart therefrom is rigidly coupled to a third toothed wheel (63) rotatably arranged on the fitting device, which third toothed wheel (63) interacts with the pawl (64).

17. Belt tensioning device according to claim 16, **characterized in that** the second toothed wheel (62) and the third toothed wheel (63) are arranged such that the torsion element (60) is formed bar-shaped parallel to the winding axis (W).

## Revendications

1. Dispositif tendeur de ceinture pour tendre une ceinture de sécurité de véhicule automobile en cas de collision comprenant :
- un dispositif de ferrure (1) déterminé pour la fixation sur une carrosserie de véhicule automobile,
- un dispositif de filetage (2) couplé rigidement au dispositif de ferrure (1), qui présente une section de poussée de piston (20) s'étendant le long d'un axe d'enroulement (W) avec un filetage (21) s'étendant autour de l'axe d'enroulement (W),
- une broche d'enroulement (3), pour l'enroulement partiel d'une ceinture de sécurité de véhicule automobile (G), entourant l'axe d'enroulement (W), disposée à rotation autour de l'axe d'enroulement (W) sur le dispositif de ferrure (1) et réalisée au moins par endroits creuse, la broche d'enroulement (3) présentant une paroi intérieure (30) tournée vers l'axe d'enroulement (W),
- un piston pousseur (4) disposé de manière mobile au moins le long de la section de poussée de piston (20) du dispositif de filetage (2) le long de l'axe d'enroulement (W), qui coopère mécaniquement avec le filetage (21) et la paroi intérieure (30) de la broche d'enroulement (3) de sorte qu'un mouvement essentiellement linéaire du piston pousseur (4) le long de la section de poussée de piston (20) impose une rotation de la broche d'enroulement (3) dans un sens de tension de ceinture (S) et
- un dispositif d'entraînement pour l'entraînement du mouvement de piston,
**caractérisé en ce que**
la paroi intérieure (30) de la broche d'enroulement (3) présente, considérée en direction de l'axe d'enroulement (W), au moins le long de la section de poussée de piston (20) s'étendant le long de l'axe d'enroulement (W), un contour de broche (31) divergeant d'une forme circulaire.

2. Dispositif tendeur de ceinture selon la revendication 1, **caractérisé en ce que** le piston pousseur (4), considéré en direction de l'axe d'enroulement (W), présente un contour extérieur de piston (41) plus petit par rapport au contour (31) de la broche d'enroulement (3).

3. Dispositif tendeur de ceinture selon la revendication 2, **caractérisé en ce que** le contour extérieur de piston (41) du piston pousseur (4) correspond essentiellement au contour (31) de la broche d'enroulement (3).

4. Dispositif tendeur de ceinture selon la revendication 2 ou 3, **caractérisé en ce que** le contour extérieur (41) du piston pousseur (4) est réalisé plus petit que le contour de broche (31) de sorte qu'au moins une fente (S) se forme entre le contour extérieur (41) du piston pousseur (4) et la paroi intérieure (30) de la broche d'enroulement (3).

5. Dispositif tendeur de ceinture selon la revendication 4, **caractérisé en ce que** la fente (S) est rendue étanche au moyen d'un dispositif d'étanchéité (40) disposé sur le contour extérieur de piston (41).

6. Dispositif tendeur de ceinture selon la revendication 5, **caractérisé en ce que** la fente et le dispositif d'étanchéité (40) sont réalisés uniformément le long du contour extérieur de piston (41).

7. Dispositif tendeur de ceinture selon l'une quelconque des revendications précédentes, **caractérisé en ce que** le filetage (21) du dispositif de filetage (2) s'étend en forme de barre le long de l'axe d'enroulement (W) et le piston pousseur (4) peut être déplacé essentiellement linéairement le long de la section de poussée de piston (20).

8. Dispositif tendeur de ceinture selon la revendication 7, **caractérisé en ce que** le dispositif de filetage entier est réalisé en forme de barre.

9. Dispositif tendeur de ceinture selon l'une quelconque des revendications précédentes, **caractérisé en ce que** la broche d'enroulement (3) s'étend comme un corps creux avec une section transversale essentiellement constante sous la forme d'un contour de broche (31) le long de l'axe d'enroulement (W).

10. Dispositif tendeur de ceinture selon l'une quelconque des revendications précédentes, **caractérisé en ce que** le dispositif d'entraînement est réalisé comme un générateur à gaz (5) pyroélectrique.

11. Dispositif tendeur de ceinture selon la revendication 10, **caractérisé en ce que** le générateur à gaz (5) est disposé sur le piston pousseur (4), sur le dispositif de filetage (2), sur la broche d'enroulement (3) ou sur le dispositif de ferrure (1).

12. Dispositif tendeur de ceinture selon l'une quelconque des revendications précédentes, **caractérisé en ce que** le filetage (21) présente un nombre de filets avec un pas défini de telle sorte que le mouvement de rotation imposé par le mouvement du piston de la broche d'enroulement (3) tende une ceinture de sécurité de véhicule automobile (G) fixée sur la broche d'enroulement (3) d'une longueur souhaitée.

13. Dispositif tendeur de ceinture selon l'une quelconque des revendications précédentes, **caractérisé en ce qu'**un dispositif de verrouillage (6) qui autorise la rotation de la broche d'enroulement (3) dans le sens de tension de ceinture (B) et verrouille une rotation opposée de la broche d'enroulement (3) dans le sens de verrouillage, est prévu sur le dispositif de ferrure (1).

14. Dispositif tendeur de ceinture selon la revendication 13, **caractérisé en ce que** la rotation de la broche d'enroulement (3) entraîne dans le sens de tension de ceinture un élément de torsion (60) qui agit comme un limiteur de force pour un couple agissant sur la broche d'enroulement (3) dans le sens de verrouillage.

15. Dispositif tendeur de ceinture selon la revendication 13 ou 14, **caractérisé en ce que** le dispositif de verrouillage (6) présente une première roue dentée (61) disposée coaxialement à l'axe d'enroulement (W), couplée rigidement à la broche d'enroulement (3) et un cliquet d'arrêt (64) coopérant avec la première roue dentée (61).

16. Dispositif tendeur de ceinture selon la revendication 15, **caractérisé en ce que** le dispositif de verrouillage (6) présente une deuxième roue dentée (62) fixée à rotation sur le dispositif de ferrure (1), qui engrène la première roue dentée (61), la deuxième roue dentée (62) étant couplée rigidement à une extrémité de l'élément de torsion (61) et une autre extrémité espacée de celle-ci de l'élément de torsion (60) étant couplée rigidement à une troisième roue dentée (63) disposée à rotation sur le dispositif de ferrure, qui coopère avec le cliquet d'arrêt (64).

17. Dispositif tendeur de ceinture selon la revendication 16, **caractérisé en ce que** la deuxième roue dentée (62) et la troisième roue dentée (63) sont disposées de sorte que l'élément de torsion (60) soit réalisé en forme de barre parallèlement à l'axe d'enroulement (W).
